# EUROPEAN PATENT APPLICATION

(11) **EP 2 482 421 A1**
(43) Date of publication of application: **01.08.2012**
(21) Application number: 12075005.4
(22) Date of filing: 18.01.2012
(51) Int. Cl.: H02J 3/38, H02J 3/18, H02J 3/50

(54) **Reactive voltage control system and method for wind power field of double-fed wind power-generating units**

(30) Priority: 31.01.2011 CN 201110033986
(71) Applicant: Sinovel Wind Group Co., Ltd, Haidian District, Beijing 100872 (CN)
(72) Inventor: Liu, Zhi, Beijing 100872 (CN); Xin, Lifu, Beijing 100872 (CN); Yang, Song, Beijing 100872 (CN); Su, Liying, Beijing 100872 (CN); Li, Yang, Beijing 100872 (CN)
(74) Representative: Pfenning, Meinig & Partner GbR

(57) **Abstract**

The invention provides a reactive voltage control system and a reactive voltage control method for a wind power field of the double-fed wind power-generating unit. The system comprises dispatching center equipment, a power management module for the wind power field and a plurality of controllers for the double-fed wind power-generating unit, wherein the dispatching center equipment is used for calculating a reactive power set value of the wind power field according to real-time monitored voltage and active power at a control point of the wind power field and a reference voltage; the power management module for the wind power field is used for distributing the reactive power set value in the wind power field; and the plurality of controllers for the double-fed wind power-generating unit are used for controlling corresponding double-fed wind power-generating unit to perform reactive power compensation according to the reactive voltage value of the double-fed wind power-generating unit distributed by the power management module for the wind power field. According to the reactive voltage control system and the reactive voltage control method for the wind power field of the double-fed wind power-generating unit, the reactive output capability of the double-fed wind power-generating unit can be fully exerted, the cost of reactive power compensation equipment of the wind power field is reduced, and the purpose of controlling the voltage of the wind power field is fulfilled by mutual coordination and control of the dispatching center equipment, the power management module for the wind power field and the plurality of controllers for the double-fed wind power-generating unit.

## Description

### FIELD OF THE TECHNOLOGY

The invention relates to a wind power field control technology, in particular to a reactive voltage control system and a reactive voltage control method for a wind power field of a double-fed unit.

### BACKGROUND

With continuous increment of wind power grid connection capacity, the magnitudes of wind speed fluctuation, power grid intensity and wind power installed capacity bring a series of problems to the voltage stability of a regional power grid.

A double-fed wind power-generating unit has strong and continuous reactive power adjusting capability, but the wind power field with the conventional double-fed wind power-generating set mostly runs in a control mode of constant power factor, so the capability of the conventional double-fed wind power-generating set is not effectively exerted. The reactive power compensation equipment of the wind power field is mostly a series capacitor bank or an SVC (Static Var Compensator) or the like, and is difficult to realize quick, continuous and smooth adjustment.

### SUMMARY

The invention provides a reactive voltage control system and a reactive voltage control method for a wind power field of a double-fed wind power-generating unit for improving the performance of the traditional double-fed wind power-generating unit.

One aspect of the invention provides a reactive voltage control system for a wind power field of a double-fed wind power-generating unit, comprising a dispatching center equipment, a power management module for the wind power field and a plurality of controllers for the double-fed wind power-generating unit. The dispatching center equipment is used for calculating a reactive power set value of the wind power field according to real-time monitored voltage and active power at a control point of the wind power field and a reference voltage; the power management module for the wind power field is used for distributing the reactive power set value in the wind power field; and the plurality of controllers for the double-fed wind power-generating unit are used for controlling the corresponding double-fed wind power-generating unit to perform reactive power compensation according to the reactive voltage value of the double-fed wind power-generating unit distributed by the power management module for the wind power field.

Another aspect of the invention provides a reactive voltage control method for the wind power field of a double-fed wind power-generating unit, comprising the following steps of:

calculating a reactive power set value of the wind power field according to a real-time monitored voltage and active power at a control point of the wind power field and a reference voltage;

distributing the reactive power set value in the wind power field; and

controlling corresponding double-fed wind power-generating unit to perform reactive power compensation according to the reactive voltage value of the double-fed wind power-generating unit distributed by the power management module for the wind power field.

According to the reactive voltage control system and method for the wind power field of the double-fed power-generating unit provided in the invention, the reactive power set value is totally completed by the double-fed wind power-generating unit within the range allowed by the capacity of the double-fed wind power-generating unit, so that the reactive power output capability of the double-fed wind power-generating unit can be fully exerted, the cost of the reactive power compensation equipment of the wind power field is reduced, and the purpose of controlling the voltage of the wind power field is fulfilled by mutual coordination and control of the dispatching center equipment, the power management module for the wind power field and the plurality of controllers for the double-fed wind power-generating unit.

### BRIEF DESCRIPTION OF THE DRAWINGS

Figure 1 is a structural schematic diagram of a reactive voltage control system for a wind power field of a double-fed wind power-generating unit in an embodiment of the invention;

Figure 2 is a calculation flow chart for acquiring a reactive power set value in an embodiment of the invention;

Figure 3 is a structural schematic diagram of a power management module for the wind power field in an embodiment of the invention;

Figure 4 is a schematic flow chart of a reactive voltage control method for the wind power field of a double-fed wind power-generating unit in another embodiment of the invention.

### DETAILED DESCRIPTION

In order to make the purposes, the technical schemes and the advantages of the embodiments of the invention more clear, the technical schemes in the embodiments of the invention are clearly and completely described in combination with the drawings. Obviously, the described embodiments are a part of embodiments of the invention, not all embodiments. Based on the embodiments of the invention, a person skilled in the art can acquire other embodiments without creative work, and all of those embodiments are within the range protected by the invention.

The technical schemes of the embodiments of the invention are further described in the following specific embodiments in view of the drawings. The wind power field in the following embodiments means a power plant having a plurality of wind power-generating units, in particular a power plant having double-fed wind power-generating units according to the embodiments of the invention. In addition, when the voltage control point is positioned several kilometers away from the wind power field, the voltage control point can be considered as the far end of the wind power field; and when the voltage control point is positioned within several hundred meters from the wind power field, the voltage control point can be considered as the near end of the wind power field.

Embodiment I

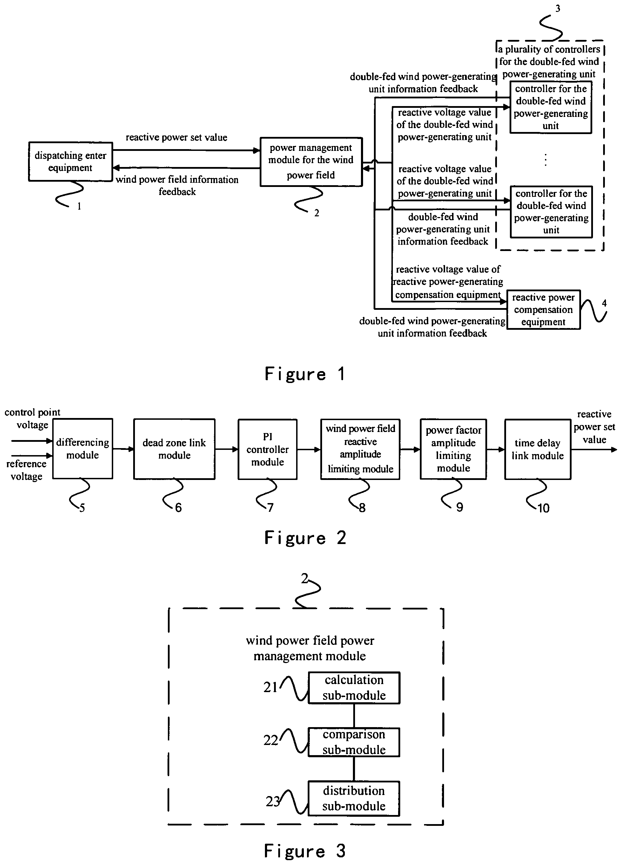

Figure 1 is a structural schematic diagram of a reactive voltage control system for a wind power field of a double-fed wind power-generating unit in an embodiment of the invention. As shown in figure 1, the system at least comprises a dispatching center equipment 1, a power management module 2 for the wind power field and a plurality of controllers 3 for the double-fed wind power-generating unit. The working principle of the system is as follows:

The dispatching center equipment 1 belongs to a reactive power demand layer of the wind power field, and is used for calculating a reactive power set value of the wind power field according to real-time monitored voltage and active power at a control point of the wind power field and a reference voltage; Figure 2 is a calculation flow chart for acquiring the reactive power set value according to an embodiment of the invention. As shown in figure 2, a differencing module 5 in the dispatching center equipment 1 is used for comparing the real-time monitored voltage at the control point of the wind power field with the reference voltage to obtain a voltage difference, a dead zone link module 6 and a proportion integration (PI) controller module 7 in the dispatching center equipment 1 are used for processing the voltage difference and then outputting the reactive power set value, and a wind power field reactive amplitude limiting module 8, a power factor amplitude limiting module 9 and a time delay link module 10 in the dispatching center equipment 1 are used for processing the reactive power set value and then outputting the final reactive power set value to the subsequent wind power field power management module 2.

The dispatching center equipment 1 can be an industrial computer, the power management module 2 for the wind power field can also be an industrial computer, and the controllers 3 for the double-fed wind power-generating unit can be programmable logic controllers (PLC) in the wind power-generating unit.

When the control point of the wind power field, namely the voltage control point of the wind power field, is at the near end of the wind power field, voltage and active power can be easily measured by adopting a sensor; when the control point of the wind power field is at the far end of the wind power field, values of voltage and active power of the far end cannot be acquired in real time because the transmission of long line signals often has time delay, and the voltage and the active power at the control point can be calculated by using the bus impedance from the control point to the near end of the wind power field and the measured values of the real-time voltage and the active power of the near end of the wind power field; the dead zone link module 6 is used for forcing the reactive power set value as 0 when the voltage difference is low; the parameter of the PI controller module 7 is generated by adjusting the voltage/reactive power property of the wind power field, so that the control system has quickness and stability; the wind power field reactive amplitude limiting module 8 and the power factor amplitude limiting module 9 are determined according to the initial design values of the wind power field; and the time delay link module 10 reflects the communication time delay between the dispatching center equipment 1 and the power management module 2 for the wind power field.

When the control point of the wind power field is at the near end of the wind power field, voltage and active power can be easily measured by adopting a sensor; when the control point of the wind power field is at the far end of the wind power field, values of voltage and active power of the far end cannot be acquired in real time because the transmission of long line signals often has time delay, and the voltage and the active power at the control point can be calculated by using the bus impedance from the control point to the near end of the wind power field and the measured values of the real-time voltage and the active power of the near end of the wind power field; the dead zone link module 6 is used for forcing the reactive power set value as 0 when the voltage difference is low, and the range of the voltage difference is generally 3 to 5 percent of the rated voltage and can be determined according to the specific condition; the PI controller module 7 is used for calculating the proportion link and the integration link of the voltage difference, and the parameter of the PI controller module 7 is generated by adjusting the voltage/reactive power property of the wind power field, so that the control system has quickness and stability; the wind power field reactive amplitude limiting module 8 and the power factor amplitude limiting module 9 are used for limiting the amplitudes of reactive power and power factor sequentially on the output of the PI controller, and the amplitude limiting values of the wind power field reactive amplitude limiting module 8 and the power factor amplitude limiting module 9 are determined according to the initial design values of the wind power field; and the time delay link module 10 reflects the communication time delay between the dispatching center equipment 1 and the power management module 2 for the wind power field.

The power management module 2 for the wind power field belongs to a reactive power distribution layer of on-site equipment, and is used for distributing the reactive power set value in the wind power field, namely distributing the reactive power set value to each double-fed wind power-generating unit in the wind power field according to an equal power factor method under the condition allowed by the capacity of the double-fed wind power-generating unit. The equal power factor distribution method means that the total reactive power set value is calculated into an expected power factor under the condition allowed by the capacity of the double-fed wind power-generating unit and then the expected value is transmitted to each double-fed wind power-generating unit in the wind power field.

The plurality of controllers 3 for the double-fed wind power-generating unit belong to reactive power output layer of the wind power-generating unit, and are used for controlling corresponding double-fed wind power-generating unit to perform reactive power compensation and distributing the reactive power value of the double-fed wind power-generating unit distributed by the power management module 2 for the wind power field to a stator and a network frequency converter in the corresponding double-fed wind power-generating unit.

The plurality of controllers 3 for the double-fed wind power-generating unit belong to reactive power output layer of the wind power-generating unit, and are used for controlling corresponding double-fed wind power-generating unit to perform reactive power compensation. The controllers 3 for the double-fed wind power-generating unit are used for calculating the reactive power required to be supplied by the wind power-generating unit according to the power factor instruction value distributed to the double-fed wind power-generating unit by the power management module 2 for the wind power field, and then distributing the reactive power to a generator stator and a network frequency converter in the corresponding double-fed wind power-generating unit.

Because the reactive power of the stator is actually realized by controlling a rotor, and the rotor only needs to process the slip ratio; and in order to reduce the power processed by the network frequency converter as much as possible, when the reactive power value of the double-fed wind power-generating unit is distributed, the reactive power value of the double-fed wind power-generating unit distributed by the power management module 2 for the wind power field is preferentially distributed to the stator according to the preferential scheme. Specifically, when the reactive power value of the double-fed wind power-generating unit is smaller than the reactive power generating limit of the stator, all the reactive power value is distributed to the stator, and the network frequency converter works in a unit power factor mode; and when the reactive power value of the double-fed wind power-generating unit is greater than the reactive power generating limit of the stator, the reactive reference value of the stator is the reactive power generating limit, and the reactive reference value of the network frequency converter is the rest reactive power value.

According to above technical scheme, in the reactive voltage control system for the wind power field of the double-fed wind power-generating unit provided by the invention, the reactive power set value is totally completed by the double-fed wind power-generating unit in the range allowed by the capacity of the double-fed wind power-generating unit, so that the reactive output capability of the double-fed wind power-generating unit can be fully exerted, the cost of the reactive power compensation equipment of the wind power field is reduced, and the purpose of controlling the voltage of the wind power field is fulfilled by mutual coordination and control of the dispatching center equipment, the power management module for the wind power field and the plurality of controllers for the double-fed wind power-generating unit.

Based on above embodiment, furthermore, the system can also comprise reactive power compensation equipment 4, which is used for performing reactive power compensation on the rest reactive power value after the reactive power set value of the wind power field is distributed to the double-fed wind power-generating unit in the wind power field. The reactive power compensation equipment can be an SVC (Static Var Compensator) or an SVG (Static Var Generator).

Figure 3 is a structural schematic diagram of a power management module for the wind power field in the invention. As shown in figure 3, the power management module 2 for the wind power field comprises a calculation sub-module 21, a comparison sub-module 22 and a distribution sub-module 23.

The calculation sub-module 21 is used for calculating the corresponding power factor according to the reactive power set value and the total active power of the double-fed wind power-generating unit in the wind power field; the comparison sub-module 22 is used for comparing the calculated power factor with the rated power factor of the double-fed wind power-generating unit and judging whether the double-fed wind power-generating unit in the wind power field can output the reactive power set value; and if the double-fed wind power-generating unit in the wind power field can output the reactive power set value, the distribution sub-module 23 distributes the reactive power set value to each double-fed wind power-generating unit in the wind power field according to an equal power factor method so as to avoid overpower of single wind power-generating unit. If the double-fed wind power-generating unit in the wind power field cannot output the reactive power set value, the distribution sub-module 23 distributes the rest reactive power value after the reactive power is completely distributed according to the maximum output force of the double-fed wind power-generating unit in the wind power field to the reactive power compensation equipment 4 in the reactive power set value, namely the double-fed wind power-generating unit in the wind power field cannot output the reactive power set value, the distribution sub-module 23 distributes the rest reactive power value after the reactive power capable of being output by the double-fed wind power-generating unit in the wind power field is removed from the reactive power set value to the reactive power compensation equipment 4.

Particularly, the comparison sub-module 22 is used for judging that the reactive power required by the wind power field is capacitive or inductive, and comparing the calculated power factor with the capacitive or inductive rated power factor of the double-fed wind power-generating unit according to the judgment result in order to judge whether the double-fed wind power-generating unit in the wind power field can output the reactive power set value. Specifically, when the power factors are compared, the comparison sub-module 22 is used for judging that the reactive power to be output is capacitive or inductive and then comparing the reactive power with the rated corresponding power factor range of the double-fed wind power-generating unit. For example, when the reactive power to be output is capacitive, the reactive power is compared with the rated capacitive power factor range of the double-fed wind power-generating unit; and when the reactive power to be output is judged to be inductive, the reactive power is compared with the rated inductive power factor range of the double-fed wind power-generating unit. When the comparison result is in the corresponding capacitive or inductive power factor range of the double-fed wind power-generating unit, it could be judged that the double-fed wind power-generating unit can meet the reactive power requirement of the wind power field; and if the comparison result exceeds the corresponding capacitive or inductive power factor range of the double-fed wind power-generating unit, the double-fed wind power-generating unit can only work at the allowed power factor rim value. The allowed power factor rim value means that the allowed power factor range of the double-fed wind power-generating unit is different due to different manufacturers of the double-fed wind power-generating unit under different active power condition.

Then, the reactive power value which the double-fed wind power-generating unit is capable to provide is calculated according to the allowed power factor rim value; and the rest reactive power demand part needs to be completed by the reactive power compensation equipment 4 in the wind power field. When the distribution sub-module 23 distributes the reactive power of the double-fed wind power-generating unit, the adopted equal power factor distribution method enables the double-fed wind power-generating unit to work in a safe power range, and can ensure the output accuracy of the reactive power of the wind power field. If the calculated power factor does not exceed the corresponding capacitive or inductive power factor range of the double-fed wind power-generating unit, the power factor instruction distributed by each double-fed wind power-generating unit is the calculated power factor value; and if the calculated power factor exceeds the corresponding capacitive or inductive power factor range of the double-fed wind power-generating unit, the power factor instruction distributed by each double-fed wind power-generating unit is the allowed capacitive or inductive power factor rim value of the double-fed wind power-generating unit,

The dispatching center equipment 1, power management module 2 for the wind power field 2, the plurality of controllers 3 for the double-fed wind power-generating unit and the reactive power compensation equipment 4 are connected through an internal network. The power management module 2 for the wind power field is realized through an industrial computer, and can complete operation monitoring of each wind power-generating unit in the wind power field besides distributing the reactive power set value output by the dispatching center equipment 1.

The number of the signal transmission directions of the dispatching center equipment 1, the power management module 2 for the wind power field, the plurality of controllers 3 for the double-fed wind power-generating unit and the reactive power compensation equipment 4 is two. On the one hand, the dispatching center equipment 1 transmits the reactive power set value to the power management module 2 for the wind power field; when the reactive power compensation equipment 4 needs to be used for supplementary regulation, the power management module 2 for the wind power field transmits the reactive power value of the reactive power compensation equipment to the reactive power compensation equipment 4 at the same time of transmitting the reactive power value of the double-fed wind power-generating unit to the controllers for the double-fed wind power-generating unit; when the reactive power compensation equipment 4 does not need to be used for supplementary regulation, the power management module 2 for the wind power field only transmits the reactive power value of the double-fed wind power-generating unit to the reactive power compensation equipment 4. On the other hand, when the reactive power compensation equipment 4 needs to be used for supplementary regulation, the controllers for the double-fed wind power-generating unit transmit the double-fed wind power-generating unit information feedback to the power management module 2 for the wind power field, and meanwhile, the reactive power compensation equipment 4 transmits the reactive power compensation equipment information feedback to the power management module 2 for the wind power field; and when the reactive power compensation equipment 4 does not need to be used for supplementary regulation, only the controllers for the double-fed wind power-generating unit transmit the double-fed wind power-generating unit information feedback to the power management module 2 for the wind power field, and power management module 2 for the wind power field transmits the wind power field information feedback to the dispatching center equipment 1. The double-fed wind power-generating unit information feedback mainly comprises active power of the double-fed wind power-generating unit and the reactive power which is being output by each wind power-generating unit, the reactive power compensation equipment information feedback mainly comprises the reactive power value which is being output by the reactive power compensation equipment, and the wind power field information feedback mainly comprises the voltage and the active power at the control point of the wind power field.

The number of the signal transmission directions of the dispatching center equipment 1, the power management module 2 for the wind power field, the plurality of controllers 3 for the double-fed wind power-generating unit and the reactive power compensation equipment 4 is two. On the one hand, the dispatching center equipment 1 transmits the reactive power set value to the power management module 2 for the wind power field; when the reactive power compensation equipment 4 needs to be used for supplementary regulation, the power management module 2 for the wind power field transmits the reactive power value of the reactive power compensation equipment to the reactive power compensation equipment 4 at the same time of transmitting the reactive power value of the double-fed wind power-generating unit to the controllers for the double-fed wind power-generating unit; when the reactive power compensation equipment 4 does not need to be used for supplementary regulation, the power management module 2 for the wind power field only transmits the reactive power value of the double-fed wind power-generating unit to the plurality of controllers 3 for the double-fed wind power-generating unit. On the other hand, when the reactive power compensation equipment 4 needs to be used for supplementary regulation, the controllers for the double-fed wind power-generating unit transmit the double-fed wind power-generating unit information feedback to the power management module 2 for the wind power field, and meanwhile, the reactive power compensation equipment 4 transmits the reactive power compensation equipment information feedback to the power management module 2 for the wind power field; and when the reactive power compensation equipment 4 does not need to be used for supplementary regulation, only the controllers for the double-fed wind power-generating unit transmit the double-fed wind power-generating unit information feedback to the power management module 2 for the wind power field, and the power management module 2 for the wind power field transmits the wind power field information feedback to the dispatching center equipment 1. The double-fed wind power-generating unit information feedback mainly comprises active power of the double-fed wind power-generating unit and the reactive power which is being output by each wind power-generating unit, the reactive power compensation equipment information feedback mainly comprises the reactive power value which is being output by the reactive power compensation equipment, and the wind power field information feedback mainly comprises the voltage and the active power at the control point of the wind power field.

Embodiment II

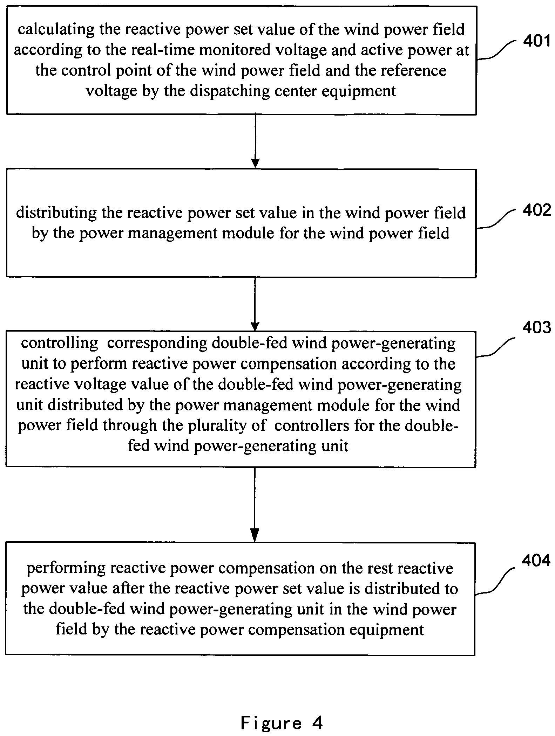

Figure 4 is a flow schematic flow chart of a reactive voltage control method for the wind power field with the double-fed wind power-generating unit in another embodiment. The method can be executed by the reactive voltage control system for the wind power field with the double-fed wind power-generating unit in the embodiment I. The reactive voltage control method for the wind power field with the double-fed wind power-generating unit comprises the following steps of:

Step 401, calculating the reactive power set value of the wind power field according to the real-time monitored voltage and active power at the control point of the wind power field and the reference voltage by the dispatching center equipment.

Specifically, judging that the voltage control point of the wind power field is at the far end or the near end. When the voltage control point is at the near end, measuring the voltage and the active power through a sensor; when the voltage control point is at the far end, calculating the voltage and the active power of the voltage control point by using the bus impedance from the voltage control point to the near end of the wind power field, and the measured values of the real-time voltage and the active power of the near end of the wind power field; comparing the acquired voltage of the voltage control point with the preset reference voltage to obtain a voltage difference; when the voltage difference is low, for example, 3 to 5 percent of the rated voltage, forcing the reactive power set value as 0, otherwise, calculating the proportion link and the integration link of the voltage difference, wherein the parameter of the voltage difference is generated by adjusting the voltage/reactive power property of the wind power field; processing the adjusted voltage difference according to the communication time delay between the dispatching center equipment and the power management module for the wind power field; and finally, outputting reactive power.

Step 402, distributing the reactive power set value in the wind power field by the power management module for the wind power field.

Step 403, controlling corresponding double-fed wind power-generating unit to perform reactive power compensation according to the reactive voltage value of the double-fed wind power-generating unit distributed by the power management module for the wind power field through the plurality of controllers for the double-fed wind power-generating unit.

Selectively, the method also comprises a step of:

Step 404, performing reactive power compensation on the rest reactive power value after the reactive power set value is distributed to the double-fed wind power-generating unit in the wind power field by the reactive power compensation equipment.

Selectively, the method also comprises the steps of:

Preferentially distributing the reactive power value of the double-fed wind power-generating unit distributed by the power management module for the wind power field to the stator, for the reactive power of the stator is actually realized by controlling the rotor and the rotor only needs to process the slip ratio; in order to reduce the power processed by the network frequency converter as much as possible, when the reactive power value of the double-fed wind power-generating unit is distributed, preferentially distributing the reactive power value of the double-fed wind power-generating unit distributed by the power management module for the wind power field to the stator according to the preferential scheme; specifically, when the reactive power value of the double-fed wind power-generating unit is smaller than the reactive power generating limit of the stator, distributing all the reactive power value to the stator, wherein the network frequency converter works in a unit power factor mode; and when the reactive power value of the double-fed wind power-generating unit is greater than the reactive power generating limit of the stator, taking the reactive power generating limit as the reactive reference value of the stator, and taking the rest reactive power value as the reactive reference value of the network frequency converter.

According to the reactive voltage control method for the wind power field with the double-fed wind power-generating unit in the embodiment, the reactive power set value is totally completed by the double-fed wind power-generating unit within the range allowed by the capacity of the double-fed wind power-generating unit, so that the reactive power output capability of the double-fed wind power-generating unit can be fully exerted, the cost of the reactive power compensation equipment of the wind power field is reduced, and the purpose of controlling the voltage of the wind power field is fulfilled by mutual coordination and control of the dispatching center equipment, the power management module for the wind power field and the plurality of controllers for the double-fed wind power-generating unit.

Embodiment III

The embodiment further limits the reactive voltage control method for the wind power field of the double-fed wind power-generating unit in the embodiment II. The embodiment only makes further limitation on the step 402, and other steps of the embodiment III are consistent with those of the embodiment II and are omitted here.

Specifically, in the presence of the reactive power compensation equipment, the step 402 can comprise the following steps of:

Step 4021, calculating the corresponding power factor according to the reactive power set value and the total active power of the double-fed wind power-generating unit in the wind power field.

Step 4022, comparing the calculated power factor with the rated power factor of the double-fed wind power-generating unit, and judging whether the double-fed wind power-generating unit in the wind power field can output the reactive power set value.

Step 4023, distributing the reactive power set value to each double-fed wind power-generating unit in the wind power field according to the equal power factor method if the double-fed wind power-generating unit in the wind power field can output the reactive power set value, and distributing the rest reactive power value in the reactive power set value after the reactive power is completely distributed according to the maximum output force of the double-fed wind power-generating unit in the wind power field to the reactive power compensation equipment if the double-fed wind power-generating unit in the wind power field cannot output the reactive power set value.

The step 402 can specifically comprise the following steps of:

calculating the corresponding power factor according to the reactive power set value and the total active power of the double-fed wind power-generating unit in the wind power field;

judging that the reactive power required by the wind power field is capacitive or inductive, and comparing the calculated power factor with the capacitive or inductive rated power factor of the double-fed wind power-generating unit according to the judgment result to judge whether the double-fed wind power-generating unit in the wind power field can output the reactive power set value; and

distributing the reactive power set value to each double-fed wind power-generating unit in the wind power field according to an equal power factor method if the double-fed wind power-generating unit in the wind power field can output the reactive power set value, and distributing the rest reactive power value in the reactive power set value after the reactive power is completely distributed according to the maximum output force of the double-fed wind power-generating unit in the wind power field to the reactive power compensation equipment if the double-fed wind power-generating unit in the wind power field cannot output the reactive power set value.

According to the reactive voltage control method for the wind power field of the double-fed wind power-generating unit in the embodiment, overpower of single wind power-generating unit can be avoided.

The common technicians of the field can understand that: all or partial steps for implementing the embodiments of the method can be completed through program instruction related hardware, the program can be stored in computer readable storage media, and the steps of the embodiments of the method are executed when the program is executed; and the storage media comprise various media capable of storing program codes such as a read only memory (ROM), a random access memory (RAM), a disk or an optical disk and the like.

In conclusion, the embodiments are only used for explaining the technical schemes of the invention and are not limited; though the invention is detailed by consulting the embodiments, the common technicians of the field should understand that: the technical schemes recorded in the embodiments can be modified, or partial technical characteristics are equivalently replaced; and by modifying or replacing, the essences of the corresponding technical schemes are not separated from the spirits and the ranges of the technical schemes.

## Claims

1. A reactive voltage control system for a wind power field of a double-fed wind power-generating unit **characterized by** comprising a dispatching center equipment, a power management module for the wind power field and a plurality of controllers for the double-fed wind power-generating unit, wherein the dispatching center equipment is used for calculating a reactive power set value of the wind power field according to real-time monitored voltage and active power at a control point of the wind power field and a reference voltage; the power management module for the wind power field is used for distributing the reactive power set value in the wind power field; and the plurality of controllers for the double-fed wind power-generating unit are used for controlling corresponding double-fed wind power-generating unit to perform reactive power compensation according to the reactive voltage value of the double-fed wind power-generating unit distributed by the power management module for the wind power field.

2. The reactive voltage control system for the wind power field of the double-fed wind power-generating unit according to the claim 1 **characterized in that**: the system also comprises reactive power compensation equipment which is used for performing reactive power compensation on the rest reactive power value after the reactive power set value is distributed to the double-fed wind power-generating unit in the wind power field.

3. The reactive voltage control system for the wind power field of the double-fed wind power-generating unit according to the claim 2 **characterized in that**: the power management module for the wind power field comprises a calculation sub-module, a comparison sub-module and a distribution sub-module, wherein the calculation sub-module is used for calculating the corresponding power factor according to the reactive power set value and the total active power of the double-fed wind power-generating unit in the wind power field, the comparison sub-module is used for comparing the calculated power factor with the rated power factor of the double-fed wind power-generating unit, and judging whether the double-fed wind power-generating unit in the wind power field can output the reactive power set value, and the distribution sub-module is used for distributing the reactive power set value to each double-fed wind power-generating unit in the wind power field according to an equal power factor method if the double-fed wind power-generating unit in the wind power field can output the reactive power set value, and distributing the rest reactive power value in the reactive power set value after the reactive power is completely distributed according to the maximum output force of the double-fed wind power-generating unit in the wind power field to the reactive power compensation equipment if the double-fed wind power-generating unit in the wind power field cannot output the reactive power set value.

4. The reactive voltage control system for the wind power field of the double-fed wind power-generating unit according to the claim 1 or 2 or 3 **characterized in that**: the controllers for the double-fed wind power-generating unit are also used for preferentially distributing the reactive power value of the double-fed wind power-generating unit distributed by the power management module for the wind power field to a stator.

5. The reactive voltage control system for the wind power field of the double-fed wind power-generating unit according to the claim 2 **characterized in that**: the dispatching center equipment, the power management module for the wind power field, the plurality of controllers for the double-fed wind power-generating unit and the reactive power compensation equipment are connected through an internal network.

6. The reactive voltage control system for the wind power field of the double-fed wind power-generating unit according to the claim 2 **characterized in that**: the power management module for the wind power field comprises a calculation sub-module, a comparison sub-module and a distribution sub-module, wherein the calculation sub-module is used for calculating the corresponding power factor according to the reactive power set value and the total active power of the double-fed wind power-generating unit in the wind power field, the comparison sub-module is used for judging that the reactive power required by the wind power field is capacitive or inductive, and comparing the calculated power factor with the capacitive or inductive rated power factor of the double-fed wind power-generating unit according to the judgment result in order to judge whether the double-fed wind power-generating unit in the wind power field can output the reactive power set value; and the distribution sub-module is used for distributing the reactive power set value to each double-fed wind power-generating unit in the wind power field according to an equal power factor method if the double-fed wind power-generating unit in the wind power field can output the reactive power set value, and distributing the rest reactive power value in the reactive power set value after the reactive power is completely distributed according to the maximum output force of the double-fed wind power-generating unit in the wind power field to the reactive power compensation equipment if the double-fed wind power-generating unit in the wind power field cannot output the reactive power set value.

7. A reactive voltage control method for the wind power field of the double-fed wind power-generating unit **characterized by** comprising the following steps of:
calculating the reactive power set value of the wind power field according to the real-time monitored voltage, active power at a control point of the wind power field and the reference voltage;
distributing the reactive power set value in the wind power field; and
controlling corresponding double-fed wind power-generating unit to perform reactive power compensation according to the reactive voltage value of the double-fed wind power-generating unit

8. The reactive voltage control method for the wind power field of the double-fed wind power-generating unit according to the claim 7 **characterized by** also comprising a step of performing reactive power compensation on the rest reactive power value after the reactive power set value is distributed to the double-fed wind power-generating unit in the wind power field.

9. The reactive voltage control method for the wind power field of the double-fed wind power-generating unit according to the claim 8 **characterized in that**: the step of distributing the reactive power set value in the wind power field comprises the operations of:
calculating the corresponding power factor according to the reactive power set value and the total active power of the double-fed wind power-generating unit in the wind power field;
comparing the calculated power factor with the rated power factor of the double-fed wind power-generating unit, and judging whether the double-fed wind power-generating unit in the wind power field can output the reactive power set value; and
distributing the reactive power set value to each double-fed wind power-generating unit in the wind power field according to an equal power factor method if the double-fed wind power-generating unit in the wind power field can output the reactive power set value, and distributing the rest reactive power value in the reactive power set value after the reactive power is completely distributed according to the maximum output force of the double-fed wind power-generating unit in the wind power field to the reactive power compensation equipment if the double-fed wind power-generating unit in the wind power field cannot output the reactive power set value.

10. The reactive voltage control method for the wind power field of the double-fed wind power-generating unit according to any one of the claims 7 to 9 **characterized by** also comprising a step of preferentially distributing the reactive power value of the double-fed wind power-generating unit.

11. The reactive voltage control method for the wind power field of the double-fed wind power-generating unit according to the claim 8 **characterized in that**: the step of distributing the reactive power set value in the wind power field comprises the operations of:
calculating the corresponding power factor according to the reactive power set value and the total active power of the double-fed wind power-generating unit in the wind power field;
judging that the reactive power required by the wind power field is capacitive or inductive, and comparing the calculated power factor with the capacitive or inductive rated power factor of the double-fed wind power-generating unit according to the judgment result in order to judge whether the double-fed wind power-generating unit in the wind power field can output the reactive power set value; and
distributing the reactive power set value to each double-fed wind power-generating unit in the wind power field according to an equal power factor method if the double-fed wind power-generating unit in the wind power field can output the reactive power set value, and distributing the rest reactive power value in the reactive power set value after the reactive power is completely distributed according to the maximum output force of the double-fed wind power-generating unit in the wind power field to the reactive power compensation equipment if the double-fed wind power-generating unit in the wind power field cannot output the reactive power set value.
